# EUROPEAN PATENT APPLICATION

(11) **EP 3 599 655 A1**
(43) Date of publication of application: **29.01.2020**
(21) Application number: 18200792.2
(22) Date of filing: 16.10.2018
(51) Int. Cl.: H01M 4/04, H01M 4/38, H01M 4/62

(54) **ENERGY STORAGE SYSTEM AND A METHOD OF MAKING THE SAME**

(30) Priority: 27.07.2018 US 201862703923 P
(71) Applicant: High Tech Battery Inc., 110 Taipei City (TW)
(72) Inventor: WANG CHEN, Kuei Yung, 110 Taipei City (TW)
(74) Representative: Carpmael, Robert Maurice Charles

(57) **Abstract**

An energy storage system with a cathode and an anode separated by a separator, and an electrolyte. The anode comprises a core of a specific metal and a coating on the core, the coating is formed from a material other than oxide of the specific metal.

## Description

The present invention relates to a battery for use as rechargeable energy storage, for example particularly, but not exclusively, an energy storage with enhanced electrochemical performance.

### BACKGROUND OF THE INVENTION

The basic structure of a metal ion battery includes cathode and anode separated by a separator, which are placed in an electrolyte and contained in a sealed casing.

Pristine aluminum is a common material used for forming the anode of a metal ion battery. An oxide layer Al₂O₃ is usually formed immediately on an outer surface of the pristine aluminum anode when the aluminum surface comes into contact with air resulting in a passivation layer in order that protects the underneath aluminum. The passivation layer adversely affects the activation time of the battery, anode surface morphology, and the growth of aluminum dendrites.

The time required to activate the battery with Al anode is lengthened for removing the Al₂O₃. During the removal of the Al₂O₃, dendrite is formed which pierces the separator. These phenomenons are not limited to Al anode.

A solution is to provide an anaerobic environment for electrode processing and assembling, but the cost implication is high.

The invention seeks to eliminate or at least to mitigate such shortcomings by offering an energy storage system according to the invention.

### SUMMARY OF THE INVENTION

In a first aspect of the invention there is provided An energy storage system comprising a cathode and an anode separated by a separator, and an electrolyte, wherein the anode comprises a core of a specific metal and a coating on the core, the coating is formed from a material other than oxide of the specific metal. Preferably, the coating has a standard electrode potential higher than that of the specific metal. More preferably, the coating is formed from a material comprises metal. Advantageously, the metal comprises Zinc. More advantageously, the metal comprises Tin. It is preferable that the core comprises a material selected from a group consisting aluminum and aluminum alloy. Preferably, the aluminum alloy has a purity of at least 99%. More preferably, the cathode comprises a current collector and at least one active material. Yet more preferably, the current collector comprises a material selected from a group consisting pyrolytic graphite sheet, conductive carbon paper and nickel foil. It is advantageous that the active material is of a spinel, olivine or laminated structure. More advantageously, the active material is selected from a group of materials consisting graphite, Mxene, LiFePO₄, LiMnO₂, LiMn₂O₄, Li₃V₂(PO₄)₃ and Na₃V₂(PO₄)₃. Yet more advantageously, the separator comprises a porous membrane formed from a material selected from a group consisting PTFE, PAN, glass fiber and PI. Preferably, the electrolyte comprises a molten salt formed from a mixture of a metal halogen and an imidazole salt. Preferably, the metal halogen/ imidazole salt molar ratio is 1.1 to 2.2. More preferably, the metal halogen comprises a metal halogen selected from a group consisting AlCl₃, LiCl, NaCl and MgCl₂. Yet more preferably, the metal halogen comprises a combination of metal halogens selected from a group consisting AlCl₃, LiCl, NaCl and MgCl₂. It is preferable that the imidazole salt comprises a 1-R1-3-methylimidazole chloride, wherein R1 comprises a carbon chain with from 1 to 8 carbon atoms. Advantageously, the imidazole salt comprises a compound selected from a group consisting 1-ethyl-3-methylimidazolium chloride and 1-propyl-3-methylimidazolium chloride.

In a second aspect of the invention, there is provided a method of forming the energy storage system as detailed above wherein the coating is formed on the core by way of chemical plating. More preferably, the method comprises the steps of:
cleaning the anode with a working solution of alkaline cleaner ;
rinsing the anode;
etching the anode with acid;
rinsing the anode;
forming a coating on the anode by way of chemical plating;
polishing the coating on the anode;
rinsing the anode; and
drying the anode.

In a third aspect of the invention, there is provided a method of forming the energy storage system as detailed above wherein the coating is formed on the core by way of physical vapor deposition. Preferably, the method as detailed above wherein the physical vapor deposition comprises vacuum evaporation, sputtering or ion plating. Yet more preferably, the method as detailed above comprising the steps of:
degreasing the anode;
plasma cleaning the anode; and
forming the coating on the anode by way of physical vapor deposition.

### BRIEF DESCRIPTION OF DRAWINGS

The invention will now be more particularly described, by way of example only, with reference to the accompanying drawings, in which:

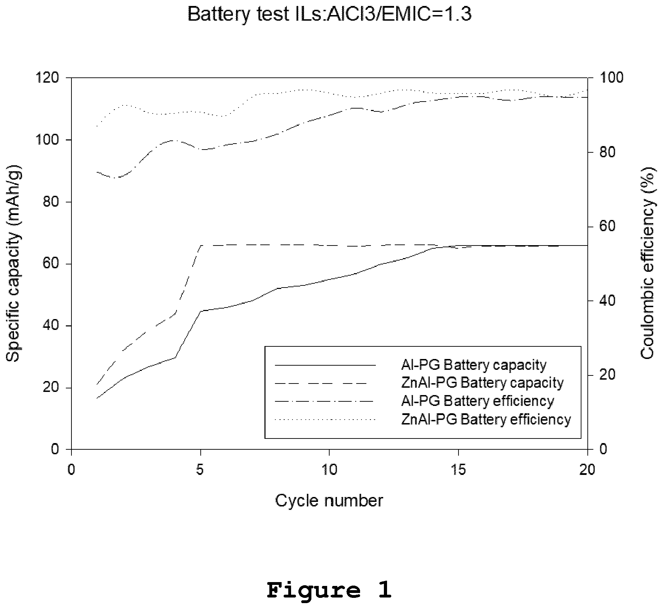

Figure 1 shows the specific capacity in mAh/g in relation to numbers of charge and discharge cycle in a battery with an anode coated with Zn in accordance with the invention and a battery that includes an anode with Al₂O₃ coating; and the Coulombic efficiency in (%) in relation to numbers of charge and discharge cycle in a battery with an anode coated with Zn in accordance with the invention and a battery that includes an anode with Al₂O₃ coating. It is apparent from Figure 1 that the battery with Zn coated anode has a shorter activation period than the battery with Al₂O₃ coated anode at 1C charge/discharge condition for reason that the battery with Zn coated anode reaches preferred specific capacity and coulombic efficiency in shorter period of time i.e. lesser number of charge and discharge cycle than the battery with Al₂O₃ coated anode;

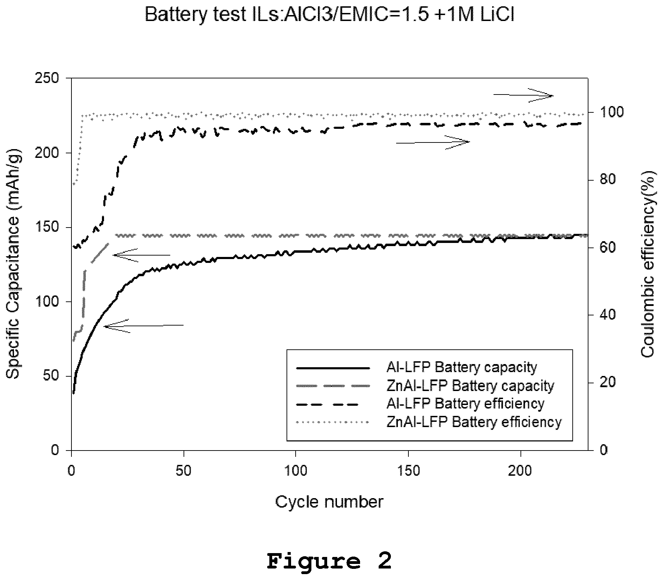

Figure 2 shows the specific capacitance in mAh/g and coulombic efficiency in % in relation to numbers of charge and discharge cycle of a battery with Zn coated anode and a battery with Al₂O₃ coated anode. The cathodes in use for both batteries herein are different from that used in the batteries with results shown in Figure 1. It remains that the battery Zn coated anode has a shorter activation period than the battery with Al₂O₃ coated anode at 0.1C charge/discharge condition for reason that the battery with Zn coated anode reaches preferred specific capacity and coulombic efficiency in shorter period of time i.e. lesser number of charge and discharge cycle than the battery with Al₂O₃ coated anode;
Figure 3 is a table showing the charge/discharge efficiency of Al anode and Zn coated Al anode in 1, 20, 30, 40 and 50 charge and discharge cycles. ;
Figure 4 is a Cycle Voltammetry (CV) plot of Al electrode;
Figure 5 is a Cycle Voltammetry (CV) plot of ZnAl electrode;
Figure 6A is Al anode surface morphology image after 300 cycles by SEM with magnification at 500x;
Figure 6B is Al anode surface morphology image after 300 cycles by SEM with magnification at 1000x
Figure 7A is Al anode with Zn coating surface morphology image after 300 cycles by SEM with magnification at 500x;
Figure 7B is Al anode with Zn coating surface morphology image after 300 cycles by SEM with magnification at 1000x; and

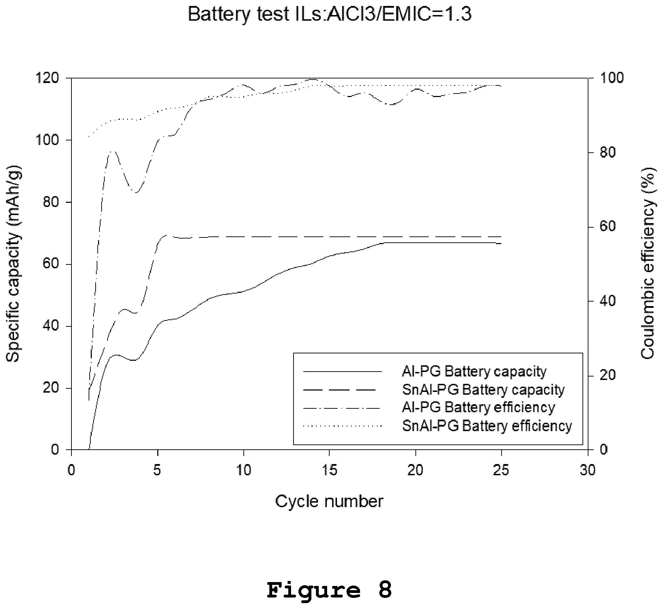

Figure 8 shows the specific capacitance in mAh/g and coulombic efficiency in % in relation to numbers of charge and discharge cycle of a battery with Sn coated anode and a battery with Al₂O₃ coated anode. The cathodes in use for both batteries herein are different from that used in the batteries with results shown in Figure 1. It remains that the battery Sn coated anode has a shorter activation period than the battery with Al₂O₃ coated anode at 1C charge/discharge condition for reason that the battery with Sn coated anode reaches preferred specific capacity and coulombic efficiency in shorter period of time i.e. lesser number of charge and discharge cycle than the battery with Al₂O₃ coated anode.

### DETAILED DESCRIPTION OF PREFERRED EMBODIMENT

The present invention is described in further details below referring to the preferred embodiments according to the present invention. It should be understood, however that the present invention is not to be construed as being limited thereto.

The battery system in accordance with the invention includes a cathode, an anode and a separator provided therebetween. These are contained in a sealed casing and immersed in an electrolyte. The anode comprises a core formed from a specific metal. The core covered by a coating formed from a material other than an oxide of the specific metal. The coating prevents the metal in the core from oxidizing by forming a passivation layer over the core that prevents the core from coming into contact with oxygen. Once the coating on the anode is formed, the assembling of the battery system does not require an anaerobic or vacuum environment. After the battery system is assembled, the coating is electrically removed at an early stage of the charging and discharging of the battery system in the factory during the activation process of the battery. It will normally take about 5 charging and discharging cycles (i.e. the early stage of charging and discharging) to complete the activation process. Efficiency of the battery system increases as the coating is being removed. In general the specific capacity of the battery system will also increase as the coating is being removed.

In conventional battery system where the aluminum is covered by aluminum oxide, the number of charging and discharging cycle, hence the time of the activation process, required for removing the aluminum oxide is at least double that for removing the coating of the battery system in accordance with the invention.

The coating comprises a layer of conductive material which is preferably metal. The metal is a transition metal or a post-transition metal, preferably Sn or Zn. As mentioned previously, the material is not an oxide of the material that forms the core. On balance, Zinc (Zn) and Tin (Sn) are comparably most suitable materials for forming the coating. The stability, conductivity and price of the material are taken into account when determining suitability. In particular, Sn and Zn do not oxidize in ambient condition and they are conductive. Therefore they are the preferred metal for anode coating formation.

The coating is formed on the core by way of chemical plating or physical vapor deposition. Physical vapor deposition is preferred over chemical plating as it is more environmentally friendly.

A thin-film of metal can be deposited on the conductive surface of the Aluminum core by chemical plating. The thickness of the thin-film of metal is under 20*µ*m to form a coating that prevents oxidation of the aluminum core. The method of depositing the metal on the core of the anode involves the steps of cleaning by way of alkaline degreasing, rinsing the cleaned anode with distilled water, etching away any aluminum oxide formed on the core by acid, rinsing the etched anode with distilled water, inserting the anode into a plating bath which commonly involves a chemical solution with the ionic form of the metal. The ionic metal is supplied with electron to form the non-ionic metal coating on the aluminum core to form a coated anode. The coated anode is then polished and dried.

Thin film of the coating material is produced on the aluminum core by way of vacuum deposition. There are three preferred physical vapor deposition methods, including evaporative deposition, sputter deposition and ion plating. Before the commencement of the physical vapor deposition, the anode aluminum core is first cleansed by degreasing. The aluminum oxide layer is removed by exposing the aluminum core to plasma. Thereafter the aluminum core under goes physical vapor deposition for the coating to be formed. This method is more expansive that chemical plating as it operates at pressure well below atmospheric pressure (i.e. vacuum). The thickness of the thin-film of metal is under 20*µ*m.

Figure 1 is a comparative graph showing 1) the specific capacity and the coulombic efficiency in relation to 1C charge/discharge cycle number of a conventional battery with Al anode and pyrolytic graphite cathode in a molten salt electrolyte formed by a mixture of AlCl₃ and EMIC with molar ratio of AlCl₃/EMIC=1.3; and 2) the specific capacity and the coulombic efficiency of the battery system in accordance with the invention in relation to cycle number at 1C charge/discharge condition with Zinc coated Al anode and pyrolytic graphite cathode in a molten salt electrolyte formed by a mixture of AlCl₃ and EMIC with molar ratio of AlCl₃/EMIC=1.3.

For both battery systems, the separator is glass fiber membrane.

The battery system with Zn coated anode reaches the specific capacity of above 66 mAh/g at about 5 cycle number at charge/discharge cycles (1C) and maintains steadily above 66 mAh/g thereafter. The conventional battery system with Al₂O₃ coated Al anode reaches the specific capacity of around 66 mAh/g at about 14 charge/discharge cycles (1C) and maintains steadily above 66 mAh/g thereafter.

The battery system with Zn coated anode reaches the coulombic efficiency of above 95% after 5-7 charge/discharge cycles while the conventional battery system with Al₂O₃ coated Al anode reaches the specific coulombic efficiency of above 95% at about 16 charge/discharge cycles (1C)

The process of preparing the battery to achieve at least 66 mAh/g specific capacity and above 95% coulombic efficiency is known as the activation process. The time or cycle numbers required to complete the activation process is much less for the battery system with Zn coated anode than for a conventional battery with Al₂O₃ coated Al anode.

In Figure 2, there is shown a comparative graph showing 1) the specific capacity and the coulombic efficiency in relation to 0.1C charge/discharge cycle number of a conventional battery with aluminum anode and cathode of 83% LiFePO_{4,} 12wt%PVDF, 5wt% super P coated on a nickel foil in a molten salt electrolyte formed by a mixture of AlCl₃ and EMIC with molar ratio of AlCl_{3/}EMIC=1.5 followed by AlCl₃/EMIC = 1.5 with 1M of LiCl; and 2) the specific capacity and the coulombic efficiency of the battery system in accordance with the invention in relation to 0.1C charge/discharge cycle number with Zinc coated aluminum anode and cathode of 83% LiFePO₄ ' 12wt%PVDF ' 5wt% super P coated on a nickel foil in a molten salt electrolyte formed by a mixture of AlCl₃ and EMIC with molar ratio of AlCl₃/EMIC=1.5 followed by AlCl_{3/}EMIC = 1.5 with 1M of LiCl.

For both battery systems, the separator is glass fiber membrane.

The battery system with Zn coated anode reaches the specific capacity of about 140 mAh/g at about 20 charge/discharge cycles (0.1C) and maintains steadily thereafter. The conventional battery with Al₂O₃ coated Al anode reaches the specific capacity of about 140 mAh/g at about 200 charge/discharge cycles (0.1C).

The battery system with Zn coated anode reaches the coulombic efficiency of about 100% after 5 charge/discharge cycles while the conventional battery with Al₂O₃ coated Al anode reaches the specific coulombic efficiency of about 98% at about 130 charge/discharge cycles (0.1C).

The process of preparing the battery to around 140 mAh/g specific capacity and around 98-100% coulombic efficiency is hereinafter known as the activation process. The time or cycle numbers required for the completion of the activation process is much less for the battery system in accordance with the invention than for a conventional battery.

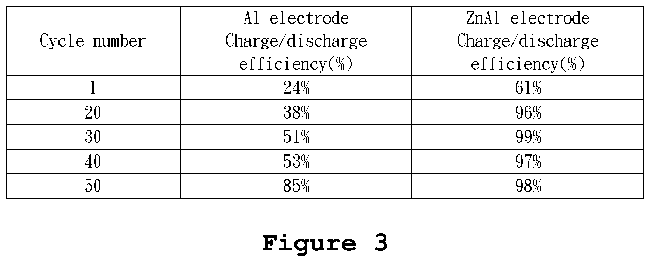

In Figures 3, 4 and 5 a three electrodes test Cycle Voltammetry (CV) result is showed. The data of Cycle Voltammetry (CV) measurements is taken using Autolab PGSTAT 30 in a three electrode test system. The different working electrodes include Al foil and ZnAl foil. The reference and the counter electrodes are aluminum foil. All of the electrodes were placed in a glass bottle with ionic liquid having a molar ratio AlCl₃/EMIC=1.3 in the glove box and sealed with a screw cap. The scan rate is 50 mV/s.

As shown in Figure 3, the Al foil working electrode requires 50 charge/discharge cycles to reach an 85% efficiency while ZnAl foil working electrode requires 20 charge/discharge cycles to reach 96% efficiency.

In more detail, for Al working electrode with Al₂O₃ coating, the charge and discharge efficiency reaches 24% in the first cycle and only reaches 38% in 20 cycles, 51% in 30 cycles, 53% in 40 cycles. For Zn coated Al working electrode, the charge and discharge efficiency reaches 61% in the first cycle and reaches 96% in 20 cycles, 99% in 30 cycles, 97% in 40 cycles and 98% in 50 cycles.

The efficiency of Zn coated Al working electrode reaches above 95% after the 20 cycles and remains more or less steady thereafter. This is comparatively more desirable than the for Al working electrode with Al₂O₃ coating where the efficiency only reaches 85% at 50 cycles.

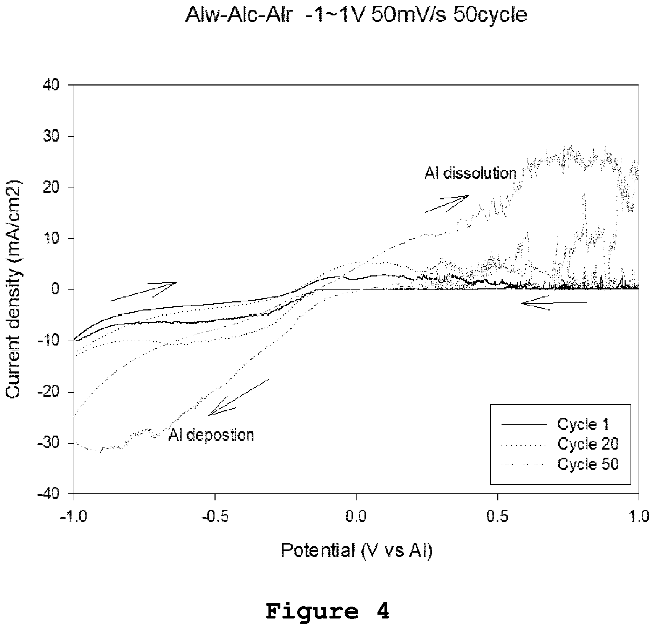

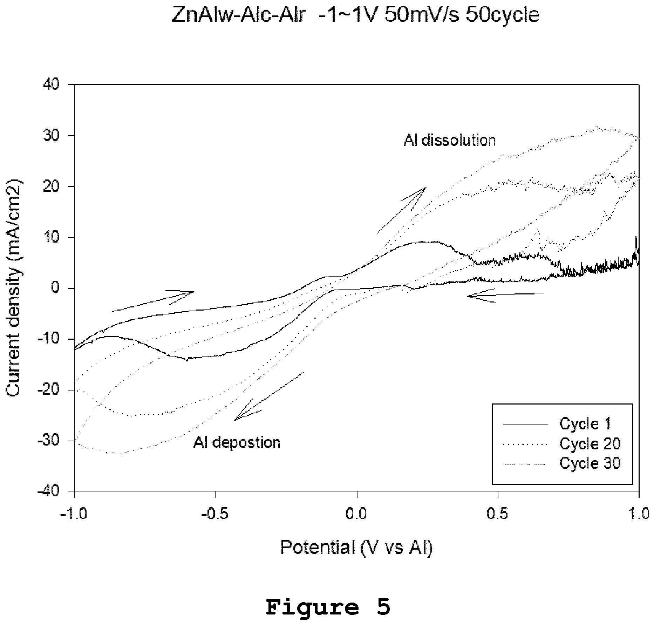

Referring to Figures 4 and 5, the fluctuation of i mA/cm²(current density) at 0.5-1 E/V(Potential; Voltage) during Al dissolution in an Al foil anode with Al₂O₃ coating as shown in Figure 4 is significantly higher than in a Zn covered Al foil electrode as shown in Figure 5. It reflects the instability of the battery with Al anode without Zn coating.

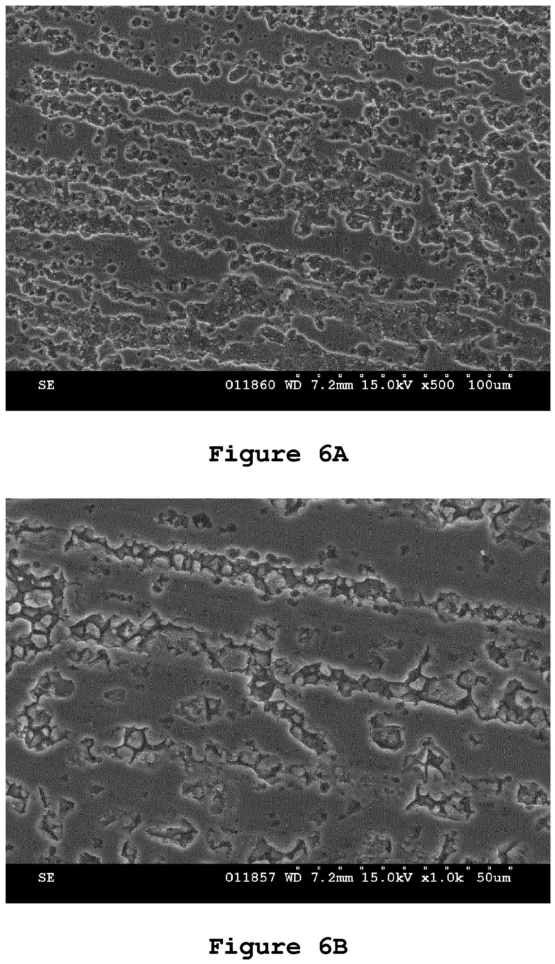

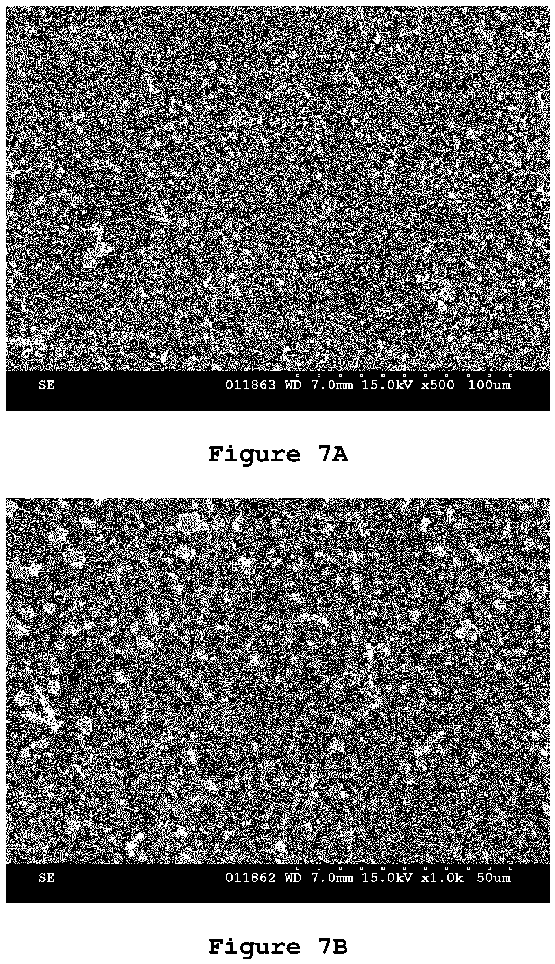

Figures 6A and 6B show the surface morphology image of the Al anode with Al₂O₃ coating after 300 cycles by SEM with a magnification at 1000x and 500x respectively. The surface reaction of the Al anode is not uniform and is uneven due to the presence and the effect of the Al₂O₃ coating. Figures 7A and 7B show the Zn covered Al anode surface morphology image after 300 cycles by SEM with a magnification at 1000x and 500x respectively. There is no Al₂O₃ on the surface and the surface reaction of the anode is more uniform than that of the Al anode with Al₂O₃ coating.

Referring to Figures 7A and 7B which shows the Zn coated Al anode surface morphology image after 300 cycles by SEM with a magnification at 1000x and 500x respectively. The surface of the Zn coated Al electrode is dense and uniform when comparing to that of the Al anode with Al₂O₃. As can be seen from Figures 6A and 6B, there are patches of localized reaction on the Al₂O₃ coated Al electrode surfaces. This is because the Al₂O₃ brings about uneven electrode reaction. Al₂O₃ being non-conductive, the dissolution, reaction and stripping of the Al₂O₃ coating is localized resulting in an uneven and non-uniform surface of the Al anode during the activation process.

In Figure 8, there is shown a comparative graph showing 1) the specific capacity and the coulombic efficiency in relation to 1C charge/discharge cycle number of a conventional battery with aluminum anode and cathode of pyrolytic graphite in a molten salt electrolyte formed by a mixture of AlCl₃ and EMIC with molar ratio of AlCl₃/EMIC=1.3; and 2) the specific capacity and the coulombic efficiency of the battery system in accordance with the invention in relation to 1C charge/discharge cycle number with Tin (Sn) coated aluminum anode and cathode of pyrolytic graphite in a molten salt electrolyte formed by a mixture of AlCl₃ and EMIC with molar ratio of AlCl₃/EMIC=1.3.

For both battery systems, the separator is glass fiber membrane.

The battery system in accordance with the invention with Sn coated Al anode reaches the specific capacity of above 66 mAh/g at about 5 charge/discharge cycles (1C) and maintains steadily above 66 mAh/g thereafter. The conventional battery with Al anode and Al₂O₃ coating reaches the specific capacity of above 66 mAh/g at about 18 charge/discharge cycles (1C) and maintains above 66 mAh/g thereafter.

The battery system with Sn coated Al anode reaches the coulombic efficiency of about 90% after 5 charge/discharge cycles (1C) while the conventional battery with Al anode and Al₂O₃ coating reaches the specific coulombic efficiency of about 90% at about 7 charge/discharge cycles (1C).

The time or cycle numbers required for the completion of the activation process is much less for the battery system with Sn coated Al anode than for a conventional battery with Al anode and Al₂O₃ coating.

The invention has been given by way of example only, and various other modifications of and/or alterations to the described embodiment may be made by persons skilled in the art without departing from the scope of the invention as specified in the appended claims.

## Claims

1. An energy storage system comprising:
a cathode and an anode separated by a separator, and
an electrolyte,
wherein the anode comprises a core of a specific metal and a coating on the core, the coating is formed from a material other than oxide of the specific metal;
Optionally, wherein the coating has a standard electrode potential higher than that of the specific metal.

2. The energy storage system as claimed in claim 1, wherein the coating is formed from a material comprises metal; Optionally, wherein the metal comprises Zinc; Optionally, wherein the metal comprises Tin.

3. The energy storage system as claimed in claim 1, wherein the core comprises a material selected from a group consisting aluminum and aluminum alloy; Optionally, wherein the aluminum alloy has a purity of at least 99%.

4. The energy storage system as claimed in claim 1, wherein the cathode comprises a current collector and at least one active material; Optionally, wherein the current collector comprises a material selected from a group consisting pyrolytic graphite sheet, conductive carbon paper and nickel foil; Optionally, wherein the active material is of a spinel, olivine or laminated structure; Optionally, wherein the active material is selected from a group of materials consisting graphite, Mxene, LiFePO₄, LiMnO₂, LiMn₂O₄, Li₃V₂(PO₄)₃ and Na₃V₂(PO₄)₃.

5. The energy storage system as claimed in claim 1, wherein the separator comprises a porous membrane formed from a material selected from a group consisting PTFE, PAN, glass fiber and PI.

6. The energy storage system as claimed in claim 1, wherein the electrolyte comprises a molten salt formed from a mixture of a metal halogen and an imidazole salt; Optionally, wherein the metal halogen/ imidazole salt molar ratio is 1.1 to 2.2.

7. The energy storage system as claimed in claim 6, wherein the metal halogen comprises a metal halogen selected from a group consisting AlCl₃, LiCl, NaCl and MgCl₂.

8. The energy storage system as claimed in claim 6, wherein the metal halogen comprises a combination of metal halogens selected from a group consisting AlCl₃, LiCl, NaCl and MgCl₂.

9. The energy storage system as claimed in claim 6, the imidazole salt comprises a 1-R1-3-methylimidazole chloride, wherein R1 comprises a carbon chain with from 1 to 8 carbon atoms.

10. The energy storage system as claimed in claim 6, wherein the imidazole salt comprises a compound selected from a group consisting 1-ethyl-3-methylimidazolium chloride and 1-propyl-3-methylimidazolium chloride.

11. A method of forming the energy storage system as claimed in any one of claims 1 to 10 wherein the coating is formed on the core by way of chemical plating.

12. A method of forming the energy storage system as claimed in any one of claims 1 to 10 wherein the coating is formed on the core by way of physical vapor deposition.

13. The method as claimed in claim 12 wherein the physical vapor deposition comprises vacuum evaporation, sputtering or ion plating.

14. The method as claimed in claim 11, comprising the steps of:
cleaning the anode with a working solution of alkaline cleaner ;
rinsing the anode;
etching the anode with acid;
rinsing the anode;
forming a coating on the anode by way of chemical plating;
polishing the coating on the anode;
rinsing the anode; and
drying the anode.

15. The method as claimed in claim 12 comprising the steps of:
degreasing the anode;
plasma cleaning the anode; and
forming the coating on the anode by way of physical vapor deposition.
